# EUROPEAN PATENT APPLICATION

(11) **EP 2 169 510 A1**
(43) Date of publication of application: **31.03.2010**
(21) Application number: 09170099.7
(22) Date of filing: 11.09.2009
(51) Int. Cl.: G05D 23/13

(54) **Electronic thermostatic mixer for dispensing water at guaranteed temperature and flow-rate, particularly for civil uses**

(30) Priority: 26.09.2008 IT MI20081714
(71) Applicant: Newform S.p.a., 13037 Serravalle Sesia (VC) (IT)
(72) Inventor: Gessi, Tiziano, 13011, BORGOSESIA VC (IT)
(74) Representative: Modiano, Micaela Nadia

(57) **Abstract**

An electronic thermostatic mixer for dispensing water at a guaranteed temperature and flow-rate, particularly for civil uses, comprising a container body (2) that contains two throttling valves (3) which can be operated on a flow of hot water (4) and on a flow of cold water (5), respectively, which pass through two inlet manifolds (6, 7) that can be connected to hot and cold water ducts and merge into a single main duct (8) for mixing the flows (4, 5) to then branch into at least one discharge manifold (9) that can be connected to at least one user device (10) and is provided with a flow control valve (11) for the management and closure of the at least one user device (10), the mixer further comprising management and control means (12) of the electronic type for the throttling valves (3) and for the flow control valve (11), the management and control means (12) being associated with means (14) for measuring the temperature and flow-rate of the flow of mixed fluid that passes through the main duct (8) and being controlled by remote control means (15) for selecting the flow-rate and temperature at which the water flows out of the user device (10).

## Description

The present invention relates to an electronic thermostatic mixer for dispensing water at guaranteed temperature and flow-rate, particularly for civil uses.

Mixers for civil uses, such as for example for wash basins, bidets, bathtubs and sanitary fixtures in general that can use traditional systems of the type with manual operation or with automatic operation have nowadays been commercially widespread for years.

The former are the most widespread ones and consist of flow control valve systems of the classical type, controlled by levers or knobs that are operated by the user so as to reach a flow-rate and temperature of the flowing water that is appreciated by the user.

As regards the latter, they are widespread especially in public places and consist of a motion detection system which, once it has detected the presence of the user, operate automatically the dispensing of water at a preset temperature and flow-rate.

These known types of mixers are not devoid of drawbacks, which include the fact that in conventional systems with manual operation it is not always possible to reach the flow-rate and temperature values of the dispensed water desired by the user at the same time, since the user himself acts as a regulator, which entails a number of random or nonrandom errors tied to his human nature.

Another drawback of systems of the known type with manual operation consists in that, since the user must check personally, generally with his/her hand, the temperature level of the dispensed water, the user can get scalded or come into contact with very cold water, which accordingly entails an unpleasant sensation.

A further drawback of systems of the known type with manual operation is that the user quite often does not close the flow control valves sufficiently, which entails a waste of water.

As regards systems with automatic operation of the known type, they suffer the drawback of working only and exclusively with the preset flow-rate and temperature values of the flowing water, without meeting the most disparate requirements of the generic user.

The aim of the present invention is to obviate these drawbacks, by providing an electronic thermostatic mixer that can manage and control with the maximum degree of reliability and with short adaptation and response times the flow of water dispensed by the user device.

Within this aim, an object of the present invention is to provide an electronic thermostatic mixer that makes it possible to manage a plurality of user devices with exclusive use of a single user device at a time, thus avoiding losses of flow-rate caused by simultaneous openings.

Another object of the present invention is to provide an electronic thermostatic mixer that allows the automatic interruption of water dispensation.

This aim, as well as these and other objects that will become better apparent hereinafter, are achieved by an electronic thermostatic mixer for dispensing water at a guaranteed temperature and flow-rate, particularly for civil uses, comprising a container body that contains two throttling valves which can be operated on a flow of hot water and on a flow of cold water, respectively, which pass respectively through two inlet manifolds that can be connected to hot and cold water ducts, said inlet manifolds merging into a single main duct for mixing said flows to then branch into at least one discharge manifold that can be connected to at least one user device and is provided with a flow control valve for the management and closure of said at least one user device, **characterized in that** it comprises management and control means of the electronic type for said throttling valves and for said flow control valve, said management and control means being associated with means for measuring the temperature and flow-rate of the flow of mixed fluid that passes through said main duct and being controlled by remote control means for selecting the flow-rate and temperature at which the water flows out from said at least one user device.

Further characteristics and advantages of the present invention will become better apparent from the description of a preferred but not exclusive embodiment of the electronic thermostatic mixer according to the invention, illustrated by way of non-limiting example in the accompanying drawing, wherein:

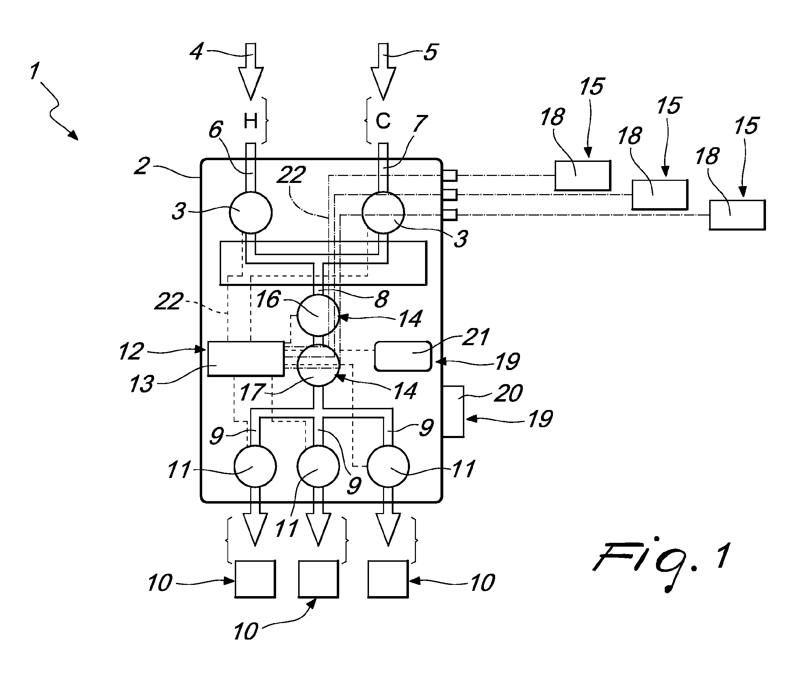

Figure 1 is a schematic view of an embodiment of an electronic thermostatic mixer according to the invention.

With reference to the figure, the electronic thermostatic mixer for dispensing water at guaranteed temperature and flow-rate, particularly for civil uses, generally designated by the reference numeral 1, comprises a container body 2, which can be fixed to a wall and contains two throttling valves 3, which can consist for example of mixing valves of the stepper type, which can be operated on a flow of hot water 4 and on a flow of cold water 5, respectively, which pass respectively through two inlet manifolds 6 and 7 that can be connected to hot and cold water ducts.

The inlet manifolds 6 and 7 merge into a single main duct 8 for mixing of the flows and then branch into at least one discharge manifold 9, which can be connected to at least one user device 10.

In the illustrated embodiment there are three discharge manifolds 9, and each one is provided with a flow control valve 11, which can consist for example of a valve of the normally-closed type for managing and closing the corresponding user device 10.

According to the invention, the mixer 1 comprises management and control means 12 of the electronic type for the throttling valves 3 and for the flow control valves 11.

Advantageously, the control and management means 12, which comprise an electronic circuit 13 provided on an adapted management card, which is contained in a hermetic enclosure 13 and is connected electronically and hermetically to the throttling valves 3 and to the flow control valves 11.

The management and control means 12 are further associated with means 14 for measuring the temperature and flow-rate of the flow of mixed fluid that passes within the main duct 8 and are controlled by remote control means 15 for selecting the flow-rate and temperature with which the water flows out of the selected user device 10.

As will be described in greater detail hereinafter, programmable memory means for the programmed dispensing of water by the user device 10 at a default temperature and flow-rate are integrated in the electronic circuit 13.

As regards the temperature and flow-rate measurement means 14 and the remote control means 15, also connected electronically to the electronic circuit 13, the former comprise a flowmeter 16 and a temperature probe 17, which are installed in series on the main duct 8, respectively, to measure the flow-rate and the temperature of the flow of mixed fluid that passes within the main duct 8, and the latter comprise at least one keypad 18 for each provided user device 10, which can be installed proximately to the user device 10 and is provided with keys for turning on, turning off and adjusting the flow-rate and temperature of the water that flows from the respective user device 10.

Each keypad 18 is a capacitive keypad of the hermetically sealed type and is provided with the "ON", "OFF", "H", "C", "+" and "-" keys to send signals for controlling the mixer 1 and with graphic display means, which consist of a digital display for visualizing the requested temperature and the actual temperature.

The entire unit is supplied with electric power at 24 V by way of electric power supply means 19, which can be connected to the electric mains by means of at least one electrical connection 20 and comprise at least one backup battery 21 for the supply of electric power as an alternative to the power supplied by the electric mains if the mains power fails.

Moreover, the electric power supply means 19 comprise the several hermetic wirings 22 for the safe electrical connection of the different components that constitute the mixer 1 inside and outside the container body 2.

As will be described in greater detail hereinafter, there is at least one test key arranged on said container body 2 to perform a test procedure, which can be started by the user and is suitable to recognize the availability of flow-rate and temperature of the water in input and the type of outlet that is installed in output in order to adapt to the current situation and achieve maximum efficiency.

Operation of the mixer 1 according to the invention is as follows.

Before entering service, i.e., whenever the mixer 1 is installed and the hydraulic system in which the mixer 1 is installed undergoes changes at the component level, the mixer 1 can perform automatically a test procedure, started by the user, which is suitable for recognizing the type of outlet that is installed at the output, such as for example chokes, jet breakers, flexible hoses and others, in order to adapt to the current situation and achieve maximum efficiency.

More precisely, after installation, in order to start said test procedure it is necessary to activate the adapted test key located on the container body 2 by means of a screwdriver or another similar tool.

During this procedure, the mixer 1, without the user operating the keypad 18, opens all the user devices 10 one at a time, varying their flow-rate and temperature.

This procedure, performed by means of dedicated software, allows the mixer 1 to read progressively the flow of water in output in different phases of opening of the throttling valves 3, so as to create and adapt the operation of the system independently of the quantity of water that is available in the mains and of the type of user device 10 that is installed.

In other words, operating curves of the mixer 1 are thus created automatically which are dedicated to the current situation and are capable of optimizing the performance of the water dispensing service.

At the end of this procedure, the mixer 1 is ready to operate with maximum efficiency.

By means of the keypad 18 correlated to a particular user device 10 it is possible to manage the opening, adjustment and closure of the mixer 1 by imparting commands by means of the keys arranged on the keypad 18; said commands are transmitted to the corresponding management card that defines the electronic circuit 13.

Specifically, the opening and closing of the mixer 1 are managed by the user by means of the "ON" and "OFF" keys.

Differently, the adjustment of flow-rate and temperature is managed by means of the "+", "-", "H" and "C" keys, respectively; the "+" and "-" keys in fact increase or decrease the flow-rate at an increment of 0.5 liters per minute for each individual pressing of the key with a rapid incremental mode and the "H" and "C" keys (which stand for "hot" and "cold") are used to raise or lower the temperature at an increment of 1°C for each pressing of the key with a rapid incremental mode.

The programmable memory means for the programmed dispensing of water on the part of the user device 10 at a default temperature and flow-rate allow the system to regulate itself according to default flow-rate and temperature values which, for example, can consist in a temperature equal to 30°C and a flow-rate of 6 liters per minute if the user does not wish to adjust the mixer 1 but merely wishes to turn it on or off.

All the information related to the operation of the mixer 1, understood as expected and real temperature and flow-rates, are represented on the graphical display so as to provide the user with real-time monitoring of the operation of the mixer 1.

Moreover, the programmable memory means also perform the function of automatic closure of the mixer 1, which in case of continuity or lack of signal for a time equal to, for example, 20 minutes automatically send the control signal to close the mixer 1.

Once the expected temperature and flow-rate values have been defined, independently of whether they are the default values or the values set by the user, the management card of the electronic circuit 13, provided with a microchip that is programmed with a suitable software, regulates the flow-rate and the temperature automatically, maintaining the values even in case of variations of the pressure and/or flow-rate on the part of the water mains, giving however priority to the temperature with an operating tolerance of ±1°C of error for the temperature and ±1 liter per minute for the flow-rate.

The management card transmits the commands to the throttling valves 3 arranged on the inlet manifolds 6 and 7, modulating the opening of flows of hot and cold water, respectively 4 and 5, that are separated at the input, allowing their mixing by passing through the main duct 8 toward the discharge ducts 9.

The temperature of the water is controlled by the management card by means of the temperature probe 17 arranged downstream of the throttling valves 3, which transmits the temperature data to such management card, which processes them continuously and, comparing them with the ones requested by the user, adjusts the opening of the throttling valves 3.

The amount of dispensed water is measured continuously by the flowmeter 16, which also is arranged downstream of the throttling valves 3 and transmits the registered data to the management card so that such card operates on the opening of the flow control valves 11 that regulate, by opening or closing, the passage of the amount of water required by the settings requested by the user at the selected user device 10.

Discharge of the water, with the adjustments described above, occurs through the flow control valves 11, which as already mentioned can be of the normally-closed type and are arranged downstream of the discharge manifolds 9.

Moreover, such valves are opened one at a time by means of the management card, depending on the user device 10 that is activated by the user, excluding the others so as to avoid any pressure drops due to simultaneous use of two or more user devices.

Finally, the presence of the backup battery 21 allows the operation of the mixer 1, ensuring autonomous operation in case of mains current failure.

In compliance with UNI 1111 standard, in case of a sudden interruption of the flow of cold water 5, an additional function of the mixer 1 consists in interrupting the flow of mixed water, showing on the display an alarm message such as for example the words "FLOW ERROR".

In practice it has been found that the electronic thermostatic mixer for dispensing water at guaranteed temperature and flow-rate, particularly for civil uses, according to the invention, fully achieves the intended aim and objects, since it makes it possible to manage and control with the maximum degree of reliability and with short response and adaptation times the flow of water dispensed by the selected user device.

Another advantage of the electronic thermostatic mixer according to the invention is that it allows the user to check and monitor in real time the operation of the mixer.

The electronic thermostatic mixer for dispensing water at guaranteed temperature and flow-rate, particularly for civil uses, thus conceived, is susceptible of numerous modifications and variations, all of which are within the scope of the appended claims. All the details may further be replaced with other technically equivalent elements.

In practice, the materials used, as long as they are compatible with the specific use, as well as the contingent shapes and dimensions, may be any according to requirements and to the state of the art.

The disclosures in Italian Patent Application No. MI2008A001714 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An electronic thermostatic mixer for dispensing water at guaranteed temperature and flow-rate, particularly for civil uses, comprising a container body (2) that contains two throttling valves (3) which can be operated on a flow of hot water (4) and on a flow of cold water (5), respectively, which pass respectively through two inlet manifolds (6, 7) that can be connected to hot and cold water ducts, said inlet manifolds (6, 7) merging into a single main duct (8) for mixing said flows (4, 5) to then branch into at least one discharge manifold (9) that can be connected to at least one user device (10) and is provided with a flow control valve (11) for the management and closure of said at least one user device (10), **characterized in that** it comprises management and control means (12) of the electronic type for said throttling valves (3) and for said flow control valve (11), said management and control means (12) being associated with means (14) for measuring the temperature and flow-rate of the flow of mixed fluid that passes through said main duct (8) and being controlled by remote control means (15) for selecting the flow-rate and temperature at which the water flows out from said at least one user device (10).

2. The mixer according to claim 1, **characterized in that** said control and management means (12) comprise an electronic circuit (13), which is connected electronically and hermetically to said throttling valves (3), to said flow control valve (11), to said remote control means (15) and to said means (14) for measuring temperature and flow-rate.

3. The mixer according to claims 1 and 2, **characterized in that** it comprises a hermetic enclosure for said electronic circuit (13).

4. The mixer according to one or more of the preceding claims, **characterized in that** it comprises electric power supply means (19), which can be connected to the electric mains by means of at least one electrical connection (20) and comprise at least one backup battery (21) for the supply of electric power as an alternative to said electrical mains.

5. The mixer according to one or more of the preceding claims, **characterized in that** said throttling valves (3) are mixing valves of the stepper type.

6. The mixer according to one or more of the preceding claims, **characterized in that** said flow control valve (11) is a valve of the normally-closed type.

7. The mixer according to one or more of the preceding claims, **characterized in that** said temperature and flow-rate measurement means (14) comprise a flowmeter (16) and a temperature probe (17), which are installed on said main duct (8), respectively, to measure the flow-rate and the temperature of the flow of mixed fluid that passes within said main duct (8).

8. The mixer according to one or more of the preceding claims, **characterized in that** said remote control means (15) comprise at least one keypad (18) for each provided user device (10), provided with keys for turning on, turning off and adjusting the flow-rate and the temperature of the water that flows from said user device (10), said at least one keypad (18) being of the hermetic type and comprising means for graphic visualization of the requested temperature and of the actual temperature .

9. The mixer according to one or more of the preceding claims, **characterized in that** said at least one keypad (18) comprises a capacitive keypad.

10. The mixer according to one or more of the preceding claims, **characterized in that** it comprises programmable memory means, which are integrated in said electronic circuit (13) for the programmed delivery of water on the part of said user device (10) at a default temperature and flow-rate.

11. The mixer according to one or more of the preceding claims, **characterized in that** it comprises at least one test key arranged on said container body (2) to perform a test procedure, which can be started by the user and is suitable for recognizing the type of outlet that is installed at the output in order to adapt to the current situation and achieve maximum efficiency.
